# EUROPÄISCHE PATENTSCHRIFT

(11) **EP 4 172 002 B1**
(45) Veröffentlichungstag und Bekanntmachung des Hinweises auf die Patenterteilung: **05.08.2026**
(21) Anmeldenummer: 21739256.2
(22) Anmeldetag: 14.06.2021
(51) Int. Cl.: B60R 11/04, E05C 17/00, E05B 81/06, E05B 81/64, E05B 85/10, E05B 81/46, E05F 15/46, E05F 15/43

(54) **VORRICHTUNG UND VERFAHREN ZUM ÜBERWACHEN EINER UMGEBUNG EINES FAHRZEUGES**
DEVICE AND METHOD FOR MONITORING AN ENVIRONMENT OF A VEHICLE
DISPOSITIF ET PROCÉDÉ DE SURVEILLANCE DE L'ENVIRONNEMENT D'UN VÉHICULE

(30) Priorität: 24.06.2020 DE 102020207846
(43) Veröffentlichungstag der Anmeldung: 03.05.2023
(73) Patentinhaber: Schaeffler Technologies AG & Co. KG, 91074 Herzogenaurach (DE)
(72) Erfinder: GRASS, Philippe, 81737 München (DE); REITMEIER, Willibald, 81737 München (DE)
(74) Vertreter: Schaeffler Technologies
(86) Internationale Anmeldenummer: PCT/EP2021/066001
(87) Internationale Veröffentlichungsnummer: WO 2021/259692

(56) Entgegenhaltungen:
- EP-A1- 2 465 727
- EP-A1- 3 437 930
- EP-A1- 3 470 272
- EP-A2- 2 930 293
- WO-A1-2017/048126
- DE-A1- 102019 103 249
- US-A1- 2018 089 859

## Beschreibung

Die Erfindung betrifft ein Fahrzeug mit einer Vorrichtung zum Überwachen einer Umgebung des Fahrzeuges, sowie ein Verfahren zum Überwachen einer Umgebung eines Fahrzeuges.

Aus dem Stand der Technik ist es bekannt, eine Umgebung eines Fahrzeuges unter Verwendung wenigstens eines Umgebungssensors wie z. B. eines Radarsensors, eines Ultraschallsensors oder einer Kamera zu überwachen.

Eine derartige Überwachung kann z. B. bei autonom fahrenden Fahrzeugen eingesetzt werden, um damit eine Detektion von Objekten wie Fahrbahnbegrenzungen, Verkehrszeichen und anderen Verkehrsteilnehmern bzw. Fahrzeugen zu ermöglichen.

Ferner kann eine derartige Überwachung vorteilhaft z. B. zur Realisierung von Fahrerassistenzsystemen eingesetzt werden, wie z. B. bei einem so genannten PDC ("Park Distance Control")-System als Einparkhilfe zum Einparken und Ausparken des Fahrzeuges auf engem Raum.

Eine noch weitere Anwendung einer derartigen Überwachung ergibt sich für Fahrzeuge, bei denen (wenigstens) ein automatisiert motorisch verlagerbares Karosserieteil wie z. B. eine Tür, eine Heckklappe oder ein Kofferraumdeckel vorgesehen ist. In diesem Fall kann mittels der Überwachung einer betreffenden Umgebung eine Objektdetektion erfolgen, um damit z. B. bei einem detektierten Hindernis eine Verlagerung des Karosserieteils zu verhindern oder zu stoppen.

Alternativ oder zusätzlich kann mit der Objektdetektion auch eine berührungslose Bedienung eines betreffenden Karosserieteils bewerkstelligt werden, indem als Objekt ein Benutzer bzw. dessen Gesten detektiert werden und in Abhängigkeit davon eine Ansteuerung der Verlagerung des Karosserieteils erfolgt.

Zugunsten einer optimalen Funktion von Umgebungssensoren werden diese in der Regel im Bereich einer Außenoberfläche der Fahrzeugkarosserie ("Außenhaut") angeordnet und sind somit von außerhalb des Fahrzeuges sichtbar.

Eine Ausnahme bilden zumeist Kameras, die auch von außerhalb nicht sichtbar z. B. hinter einem getönten, jedoch im betreffenden Spektralbereich hinreichend transparenten Außenhautbereich (z. B. hinter einer Windschutzscheibe) angeordnet werden können.

Eine derartige verdeckte Anordnung von Umgebungssensoren ist jedoch z. B. für Radarsensoren oder Ultraschallsensoren nicht möglich bzw. mit einer mehr oder weniger gravierenden Einschränkung von deren Leistungseigenschaften verbunden.

Andererseits ist bei vielen Designs von Fahrzeugen eine "ästhetische Störung" der Außenoberfläche der Fahrzeugkarosserie durch dort angebrachte Umgebungssensoren unerwünscht. In diesem Fall sind keine Sensoren möglich, die aufgrund ihrer Funktionsweise die Außenoberfläche des Fahrzeuges durchbrechen müssen.

Beispielhafte Vorrichtungen sind bekannt aus DE 10 2019 103 249 A1, EP 2 930 293 A2 und WO 2017/048126 A1.

Es ist eine Aufgabe der vorliegenden Erfindung, bei einer Überwachung einer Umgebung eines Fahrzeuges die vorstehenden Nachteile zu vermeiden und eine Überwachung ohne störende Beeinträchtigung eines Designs der Außenoberfläche des Fahrzeuges zu ermöglichen.

Gemäß eines ersten Aspekts der Erfindung wird diese Aufgabe gelöst durch ein Fahrzeug mit einer Vorrichtung zum Überwachen einer Umgebung eines Fahrzeuges, wobei das Fahrzeug aufweist: eine Fahrzeugkarosserie, ein relativ zur Fahrzeugkarosserie verlagerbares Anbauteil, und einen Stellantrieb zum Verlagern des Anbauteils zwischen einer ersten Stellung und (mindestens) einer zweiten Stellung, wobei das Anbauteil in der zweiten Stellung von außerhalb des Fahrzeuges sichtbar ist und/oder von der Fahrzeugkarosserie abstehend angeordnet ist, und wobei die Vorrichtung einen an dem Anbauteil angeordneten Umgebungssensor aufweist. Erfindungsgemäß ist der Umgebungssensor in der ersten Stellung hinter einem Karosserieteil der Fahrzeugkarosserie angeordnet und in der zweiten Stellung vor dem Karosserieteil der Fahrzeugkarosserie angeordnet.

Bei der Erfindung ist wesentlich, dass der Umgebungssensor an einem (in der "zweiten Stellung") von außerhalb des Fahrzeuges sichtbaren und/oder von der Fahrzeugkarosserie abstehend angeordneten Anbauteil und somit in exponierter Lage betrieben werden kann, wobei jedoch eine Störung des Fahrzeugdesigns dadurch vermieden werden kann, dass das Anbauteil mittels eines Stellantriebes in eine andere Stellung ("erste Stellung") verlagert werden kann, in welcher der Umgebungssensor hinter einem Karosserieteil der Fahrzeugkarosserie angeordnet ist.

Erfindungsgemäß ist somit vorgesehen, dass der Umgebungssensor sich bei in der ersten Stellung befindlichem Anbauteil in einer verdeckten Position befindet, so dass der Sensor hierbei z. B. vorteilhaft "geschützt" untergebracht sein kann (Medienschutz). In einer Ausführungsform gelangt der Umgebungssensor durch die Verlagerung des Anbauteils von der ersten in die zweite Stellung in eine nach außen hin verlagerte und/oder von einer Außenoberfläche des Fahrzeuges nach außen hin abstehende Position.

In der zweiten Stellung des Anbauteils kann der Umgebungssensor relativ zum Fahrzeug vorteilhaft z. B. mit einer im Wesentlichen orthogonal zur (lokalen) Fahrzeugoberfläche orientierten Erfassungsrichtung bzw. Haupterfassungsrichtung ("Blickrichtung") angeordnet sein und/oder in einem Abstand zu dieser (lokalen) Fahrzeugoberfläche angeordnet sein.

Vorteilhaft kann bei der Erfindung der Stellantrieb für eine Verlagerung des Anbauteils von der ersten Stellung in die zweite Stellung angesteuert werden, sofern eine bestimmte Betriebssituation des Fahrzeuges eine Überwachung unter Verwendung des daran angeordneten Umgebungssensors erfordert.

In einer Ausführungsform der Erfindung ist diese Ansteuerung bei einer Betriebssituation vorgesehen, in der ein Einparken des Fahrzeuges erfolgen soll oder bereits erfolgt, beispielsweise um damit das Anbauteil mit dem daran angeordneten (wenigstens einen) Umgebungssensor in die zweite Stellung zu verlagern und den Umgebungssensor sodann zu betreiben.

Im Fall des Einparkens (und/oder Ausparkens) kann insbesondere ein Ultraschallsensor oder ein Radarsensor oder ein sonstiger als sogenannter PDC ("Park Distance Control")-Sensor geeigneter Umgebungssensor eingesetzt werden.

In einer Ausführungsform der Erfindung ist eine den Betrieb des Umgebungssensors erfordernde Betriebssituation des Fahrzeuges dadurch gegeben, dass ein Teil der Fahrzeugkarosserie (z. B. Tür, Heckklappe, Kofferraumklappe) oder ein Anbauteil an der Fahrzeugkarosserie (z. B. Türgriff, Türkantenschutz, Außenspiegel, Zusatz-Außenspiegel, Tankklappe, Antenne, etc.) automatisiert motorisch angetrieben verlagert werden soll oder bereits verlagert wird.

Falls hierbei ein automatisiert motorisch verlagerbares Karosserieteil vorgesehen ist, so kann mittels der Überwachung einer betreffenden Umgebung eine Objektdetektion erfolgen, um damit z. B. bei einem detektierten Hindernis eine Verlagerung des Karosserieteils zu verhindern oder zu stoppen. Das Anbauteil im Sinne der Erfindung kann hierfür z. B. an dem (relativ zum Fahrzeug verlagerbaren) Karosserieteil angeordnet sein (relativ zum Karosserieteil verlagerbar). Alternativ oder zusätzlich kann mit der Objektdetektion auch eine berührungslose Bedienung des betreffenden Karosserieteils bewerkstelligt werden, indem als Objekt ein Benutzer bzw. Körperteile des Benutzers (z. B. Iris, Gesicht etc.) bzw. dessen Gesten detektiert werden und in Abhängigkeit davon eine Ansteuerung der Verlagerung des Karosserieteils erfolgt.

Bei der Erfindung muss der Umgebungssensor vorteilhafterweise keinen eigenen, z. B. ausklappbaren oder ausfahrbaren Mechanismus aufweisen, sondern der Umgebungssensor kann an einem Anbauteil angeordnet (z. B. fest angebracht) sein, für dessen Verlagerung ohnehin bereits ein geeigneter Stellantrieb vorhanden ist.

In einer Ausführungsform der Erfindung ist vorgesehen, dass das Anbauteil ein Türkantenschutz ist. Der Türkantenschutz kann z. B. ein aus Kunststoffmaterial gefertigtes und in der zweiten Stellung eine Türkante (zum Schutz derselben vor einer Beschädigung) abdeckendes oder umgreifendes Anbauteil darstellen.

Bei einer Tür, die zum Öffnen und Schließen um eine Schwenkachse (z. B. vertikale Schwenkachse) herum verschwenkbar an der Fahrzeugkarosserie angelenkt ist, kann der Türkantenschutz im Bereich derjenigen Türkante angeordnet sein, welche einen bezüglich der Schwenkachse distalen Rand der Tür ausbildet.

Der Türkantenschutz kann sich über wenigstens einen Teil der Längserstreckung der betreffenden Türkante erstrecken und hierbei den betreffenden Abschnitt der Türkante z. B. so umgreifen, dass ein unmittelbar benachbarter Bereich der Außenoberfläche der Tür vor Beschädigungen (durch Anstoßen an ein Hindernis beim Öffnen der Tür) geschützt ist.

Im Rahmen der Erfindung kann anstatt eines Türkantenschutzes an einer Tür in analoger Weise auch ein "Klappenkantenschutz" an einer Klappe wie z. B. Heckklappe oder z. B. Laderaumklappe (z. B. Kofferraumdeckel) vorgesehen sein.

In einer Ausführungsform der Erfindung ist vorgesehen, dass die Verlagerung des Anbauteils zwischen der ersten und zweiten Stellung wenigstens abschnittweise linear (translatorisch) vorgesehen ist. Alternativ oder zusätzlich kann der Verlagerungsweg z. B. auch andere Verlaufsabschnitte wie z. B. einen oder mehrere bogenförmige Abschnitte aufweisen.

In einer Ausführungsform der Erfindung ist vorgesehen, dass der Stellantrieb einen elektromotorischen Antrieb aufweist. Der elektromotorische Antrieb kann als Drehantrieb ausgebildet sein, der über ein geeignetes Getriebe mit dem betreffenden Anbauteil verbunden ist, um die im konkreten Anwendungsfall erforderliche Verlagerung des Anbauteils (z. B. rotatorisch, translatorisch, oder kombiniert rotatorisch-translatorisch) zwischen der ersten und der zweiten Stellung des Anbauteils zu bewerkstelligen.

In einer Ausführungsform ist vorgesehen, dass der (z. B. fest am Anbauteil angeordnete) Umgebungssensor bei der Verlagerung des Anbauteils um mindestens eine Achse gekippt wird. Damit kann z. B. vorteilhaft ein Erfassungsbereich ("field of view") und/oder eine virtuelle Apertur des Umgebungssensors vergrößert werden.

In einer Ausführungsform ist vorgesehen, dass der Stellantrieb einen Energiespeicher aufweist. Bei dem Energiespeicher kann es sich z. B. um einen elektrischen Energiespeicher wie z. B. einen Akkumulator oder einen Kondensator handeln. Alternativ oder zusätzlich kann ein mechanischer Energiespeicher wie z. B. eine Feder vorgesehen sein. Der Stellantrieb kann z. B. dazu ausgebildet sein, mindestens einen Verlagerungsvorgang, also von der ersten Stellung in die zweite Stellung oder von der zweiten Stellung in die erste Stellung, unter Verwendung von im Energiespeicher gespeicherter Energie zu bewerkstelligen.

In einer Ausführungsform der Erfindung ist vorgesehen, dass der Umgebungssensor ein Radarsensor ist. Bei dem Radarsensor kann es sich z. B. um eine CW (Continuous Wave)-Radarsensor handeln. In einer anderen Ausführungsform ist z. B. ein FMCW (Frequency Modulated Continuous Wave)-Radarsensor vorgesehen.

In einer Ausführungsform ist vorgesehen, dass der Umgebungssensor ein Ultraschallsensor ist.

In einer Ausführungsform ist vorgesehen, dass der Umgebungssensor ein optischer Sensor ist. Insbesondere kann es sich dabei z. B. um eine im sichtbaren Spektralbereich und/oder IR-Spektralbereich empfindliche Kamera handeln.

In einer Ausführungsform ist vorgesehen, dass der Umgebungssensor ein magnetischer Sensor ist. In einer Ausführungsform ist vorgesehen, dass der Umgebungssensor ein kapazitiver Sensor ist.

Gemäß der Erfindung ist vorgesehen, dass der Umgebungssensor in der ersten Stellung hinter einem Karosserieteil wie insbesondere z. B. einer Tür oder Klappe ("geschützt bzw. geparkt") angeordnet ist und in der zweiten Stellung vor diesem Karosserieteil angeordnet ist.

In einer Ausführungsform ist vorgesehen, dass der Umgebungssensor zur Gestenerkennung und/oder zur Identifikation eines Benutzers bzw. Körperteilen des Benutzers (z. B. Iris, Gesicht etc., z. B. mittels optischem Sensor) verwendet wird, sei es z. B. im Rahmen einer Bedienung oder Ansteuerung der Verlagerung eines Karosserieteils (Türe, Klappe etc.) oder zu anderen Zwecken (Zugangssteuerung etc.).

In einer Ausführungsform weist die Überwachungsvorrichtung eine Steuereinrichtung auf (z. B. ein oder mehrere elektronische Steuergeräte), die dazu ausgebildet ist, in Abhängigkeit einer Erfüllung von vorgegebenen ersten Kriterien den Stellantrieb für eine Verlagerung des Anbauteils anzusteuern und in Abhängigkeit einer Erfüllung vorgegebener zweiter Kriterien einen Betrieb (Einschalten, Ausschalten oder einen bestimmten Betriebsmodus) des Umgebungssensors anzusteuern.

Diese Ansteuerungen können jeweils insbesondere in programmgesteuerter Weise erfolgen, und die betreffenden Komponenten (Steuereinrichtung, Stellantrieb, Umgebungssensor) können beispielsweise über ein im Fahrzeug vorgesehenes digitales Kommunikationsbussystem (z. B. CAN-Bus, LIN-Bus etc.) kommunikativ miteinander verbunden sein.

Die ersten Kriterien können sich z. B. auf das Vorliegen von bestimmten Betriebssituationen des Fahrzeuges beziehen, z. B. ein Einparken und/oder Ausparken (erkennbar z. B. an einer entsprechenden Benutzereingabe) oder z. B. ein Einsteigen und/oder Aussteigen von Personen (z. B. erkennbar an entsprechenden Bedienhandlungen dieser Personen, z. B. an Türen).

Die zweiten Kriterien können sich ebenfalls auf das Vorliegen bestimmter Betriebssituationen beziehen. Alternativ oder zusätzlich beziehen sich die zweiten Kriterien auf die aktuelle Stellung und/oder Verlagerung des betreffenden Anbauteils. In diesem Fall kann insbesondere vorgesehen sein, dass die Steuereinrichtung den Umgebungssensor aktiviert, sobald eine Verlagerung des Anbauteils von der ersten in die zweite Stellung beginnt, oder alternativ z. B. sobald das Anbauteil die zweite Stellung erreicht.

In einer Ausführungsform der Erfindung weist die Fahrzeugkarosserie ein automatisiert motorisch verlagerbares (z. B. rotatorisch, translatorisch, oder kombiniert rotatorisch-translatorisch verlagerbares) Karosserieteil wie insbesondere z. B. eine Tür oder eine Klappe (z. B. Heckklappe oder Kofferraumdeckel) auf, wobei dieses Karosserieteil das Anbauteil im Sinne der Erfindung darstellt.

In einer anderen Ausführungsform der Erfindung weist die Fahrzeugkarosserie zwar ebenfalls ein solches (verlagerbares) Karosserieteil auf, welches jedoch nicht als solches das Anbauteil im Sinne der Erfindung darstellt, sondern an welchem das Anbauteil (samt Umgebungssensor) angeordnet ist. Ein Beispiel hierfür ist eine motorisch verlagerbar an dem Fahrzeug angeordnete Tür oder Klappe, an welcher wiederum motorisch verlagerbar (durch den Stellantrieb, bezüglich der Tür bzw. Klappe) ein Türkantenschutz bzw. Klappenkantenschutz (samt Umgebungssensor) angeordnet ist.

Gemäß eines weiteren Aspekts der Erfindung wird die eingangs gestellte Aufgabe gelöst durch ein Verfahren zum Überwachen einer Umgebung eines Fahrzeuges, wobei das Fahrzeug aufweist: eine Fahrzeugkarosserie, ein relativ zur Fahrzeugkarosserie verlagerbares Anbauteil, und einen Stellantrieb zum Verlagern des Anbauteils zwischen einer ersten Stellung und (mindestens) einer zweiten Stellung, wobei an dem Anbauteil ein Umgebungssensor angeordnet ist, der in der ersten Stellung hinter einem Karosserieteil der Fahrzeugkarosserie angeordnet ist und in der zweiten Stellung vor dem Karosserieteil der Fahrzeugkarosserie angeordnet ist, wobei das Anbauteil in der zweiten Stellung von außerhalb des Fahrzeuges sichtbar ist und/oder von der Fahrzeugkarosserie abstehend angeordnet ist, und wobei das Verfahren aufweist: Überwachen der Umgebung des Fahrzeuges mittels des an dem Anbauteil angeordneten Umgebungssensors, während das Anbauteil sich in der zweiten Stellung befindet und/oder während das Anbauteil zwischen der ersten Stellung und der zweiten Stellung verlagert wird. In einer Ausführungsform des Verfahrens ist vorgesehen, dass dieses Überwachen bereits in der ersten Stellung beginnt.

Die für die erfindungsgemäße Vorrichtung (oder ein damit ausgestattetes Fahrzeug) hier beschriebenen Ausführungsformen und besonderen Ausgestaltungen können, einzeln oder in beliebiger Kombination, in analoger Weise auch als Ausführungsformen bzw. besondere Ausgestaltungen des erfindungsgemäßen Verfahrens vorgesehen sein, und umgekehrt.

In einer Ausführungsform des Verfahrens ist vorgesehen, dass das Überwachen durchgeführt wird, während das Anbauteil sich in der zweiten Stellung befindet.

In einer Ausführungsform des Verfahrens ist vorgesehen, dass das Überwachen durchgeführt wird, während das Anbauteil von der ersten Stellung in die zweite Stellung verlagert wird. Falls hierbei als Umgebungssensor ein am Anbauteil angebrachter CW-Radarsensor verwendet wird, kann vorteilhaft vorgesehen sein, die durch die Verlagerung des Anbauteils bewirkte Bewegung des CW-Radarsensors auszunutzen, um (anhand der sich ergebenden "Dopplerinformation") auch unbewegte Objekte in der Umgebung des Fahrzeuges zu detektieren. Dies im Gegensatz zu einem üblichen Einsatz eines stationären CW-Radarsensors, mit dem lediglich bewegte Objekte bzw. deren Geschwindigkeit erfasst werden können. Ein ähnlicher Vorteil ergibt sich, falls bei dieser Ausführungsform ein FMCW-Radarsensor verwendet wird. Durch Mitberücksichtigung der durch die Verlagerung des Anbauteils bewirkten Bewegung des FMCW-Radarsensors kann dessen Auflösung verbessert werden. In einer in dieser Hinsicht besonders vorteilhaften Ausführungsform besitzt der betreffende FMCW-Radarsensor eine sogenannte MIMO (Multiple Input Multiple Output)-Struktur. Wenn diese MIMO-Struktur bewegt wird, ergeben sich imaginäre MIMO-Punkte, die aus der Bewegung der Gesamtstruktur resultieren. Mit der damit erhältlichen Zusatzinformation kann vorteilhaft die Auflösung des Sensors erhöht werden. Ferner ergibt sich ein ähnlicher Vorteil, falls ein Ultraschallsensor mit einem raumwinkelmäßig relativ kleinen Erfassungsbereich verwendet wird, so dass z. B. Gegenstände, die nicht an mindestens einer Stelle die Sensorachse ("Blickrichtung") schneiden, nicht detektiert werden können. Wenn ein solcher Ultraschallsensor jedoch bedingt durch die erfindungsgemäß vorgesehene Verlagerung des Anbauteils bewegt wird, so kann der Sensor vorteilhaft einen größeren Erfassungsbereich überfahren ("abtasten").

Die vorstehenden erläuterten Vorteile bei Einsatz eines Radarsensors oder Ultraschallsensors können für den Betrieb des betreffenden Sensors unter Umständen auch in denjenigen Situationen genutzt werden, in denen sich das Anbauteil (noch) in der ersten Stellung befindet und/oder sich (bereits) in der zweiten Stellung befindet. Nämlich kann sich in diesen Situationen eine Bewegung des Sensors dadurch ergeben, dass ein relativ zum Fahrzeug sich verlagerndes Karosserieteil (z. B. Tür oder Klappe) vorgesehen ist, an welchem das Anbauteil und somit der Sensor angeordnet ist (z. B. Türkantenschutz bzw. Klappenkantenschutz).

In einer Ausführungsform des Verfahrens ist vorgesehen, dass das Überwachen mittels des Umgebungssensors endet, während das Anbauteil sich (noch) in der zweiten Stellung befindet. Alternativ kann diese Überwachung z. B. enden, sobald die Verlagerung von der zweiten Stellung in die erste Stellung beginnt (oder z. B. enden, sobald hierbei die erste Stellung erreicht wird).

Es versteht sich, dass Festlegungen von Beginn und/oder Ende des Überwachens basierend auf den oben erläuterten Kriterien (insbesondere z. B. im Zusammenhang mit der Stellung des Anbauteils) alternativ oder zusätzlich auch basierend auf einem ermittelten Überwachungsbedarf festgelegt werden können.

In einer Ausführungsform der Erfindung ist vorgesehen, dass das Fahrzeug (wenigstens) ein automatisiert motorisch relativ zum Fahrzeug verlagerbares Karosserieteil wie z. B. eine Tür oder eine Klappe (z. B. Laderaumklappe wie Heckklappe oder Kofferraumdeckel) aufweist, und dass mittels des Umgebungssensors eine Überwachung erfolgt, um damit z. B. bei einem (durch "Objektdetektion") detektierten Hindernis eine motorische Verlagerung des Karosserieteils zu verhindern oder zu stoppen. Alternativ oder zusätzlich kann damit auch eine berührungslose Bedienung des betreffenden Karosserieteils realisiert sein, indem als Objekt ein Benutzer bzw. dessen Gesten detektiert werden und in Abhängigkeit davon eine Ansteuerung der motorischen Verlagerung des Karosserieteils erfolgt. Das Anbauteil, an welchem der Umgebungssensor angeordnet ist, kann hierbei das verlagerbare Karosserieteil sein, oder ein am Karosserieteil relativ zum Karosserieteil verlagerbar angeordnetes Anbauteil.

Die Erfindung wird nachfolgend anhand von Ausführungsbeispielen mit Bezug auf die beigefügten Zeichnungen weiter beschrieben. Es stellen dar:
Fig. 1 eine Draufsicht eines Fahrzeuges, das mit einer Vorrichtung zum Überwachen einer Umgebung eines Fahrzeuges, gemäß eines nicht-erfindungsgemäßen Ausführungsbeispiels,
Fig. 2 eine Draufsicht des Fahrzeuges von Fig. 1 nach Öffnung einer Tür,
Fig. 3 eine der Fig. 2 entsprechende Draufsicht eines Fahrzeuges gemäß eines erfindungsgemäßen Ausführungsbeispiels, und
Fig. 4 ein Ablaufdiagramm zur Erläuterung eines Verfahrens zum Überwachen einer Umgebung eines Fahrzeuges.

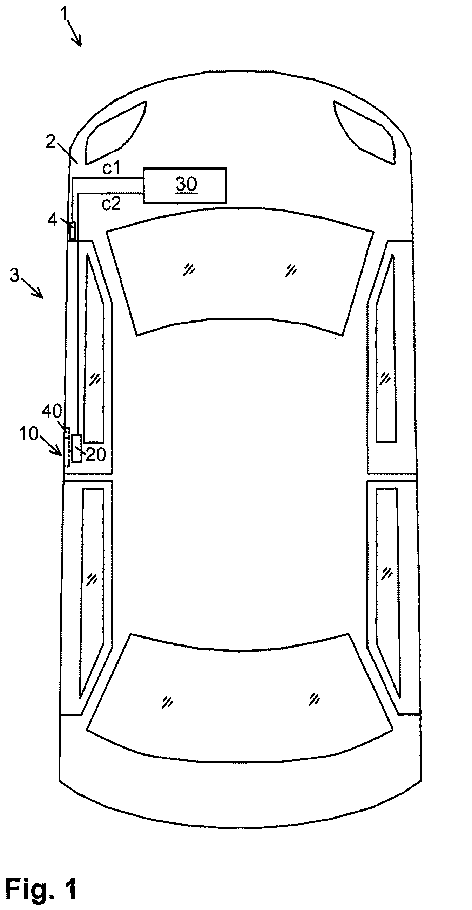

Fig. 1 zeigt ein Fahrzeug 1, das eine Fahrzeugkarosserie 2 umfassend eine Tür 3 und eine ansteuerbare Antriebseinrichtung 4 zum ansteuerbaren motorischen Antreiben der Tür 3 in einer Öffnungsrichtung und in einer Schließrichtung der Tür 3 aufweist. Mittels der Antriebseinrichtung 4 kann in für einen Benutzer komfortabler Weise ein automatisiertes Öffnen und Schließen der Tür 3 erfolgen.

Im dargestellten Beispiel ist das Fahrzeug 1 ein viertüriger PKW, dessen Türen jeweils um eine vertikale Schwenkachse herum verschwenkbar am Fahrzeug 1 angelenkt sind. Die Tür 3 bezeichnet in diesem Beispiel die Fahrertür des dargestellten PKW.

Das Fahrzeug 1 weist als ein "Anbauteil" einen relativ zur Fahrzeugkarosserie 2 (hier: relativ zur Tür 3) verlagerbaren Türgriff 10 auf.

In der in Fig. 1 dargestellten Situation befindet sich der Türgriff 10 in einer "ersten Stellung", in welcher der Türgriff 10 in der Fahrzeugkarosserie 2 (hier: in der Tür 3) versenkt angeordnet ist, z. B. im Wesentlichen bündig zu einer Außenoberfläche der Tür 3.

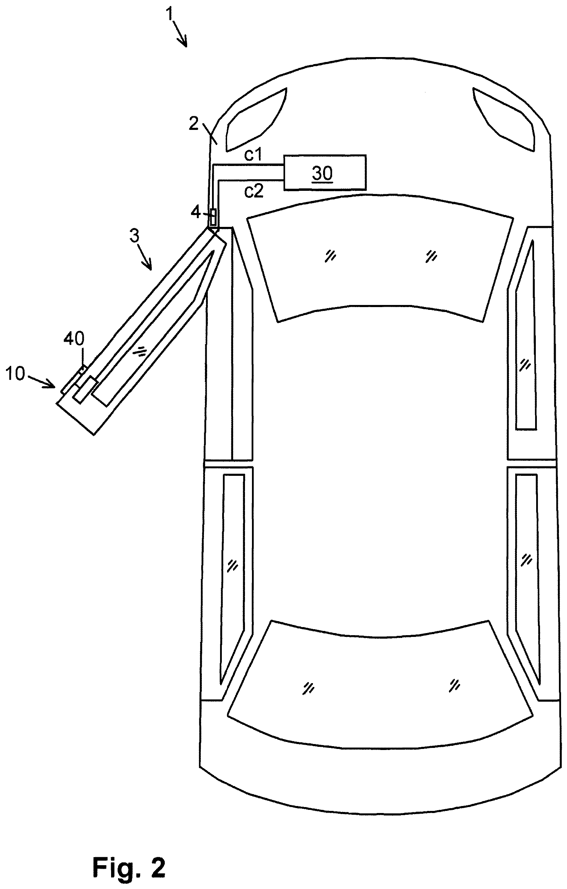

In der Tür 3 ist ein ansteuerbarer Stellantrieb 20 integriert, mittels welchem der Türgriff 10 von der ersten Stellung in eine "zweiten Stellung" verlagert werden kann, in welcher der Türgriff 10 von der Fahrzeugkarosserie 2 nach außen hin absteht (wie z. B. in Fig. 2 ersichtlich).

Das Fahrzeug 1 weist ferner eine Steuereinrichtung 30 auf, die im dargestellten Beispiel als ein elektronisches programmgesteuertes Steuergerät implementiert und dazu ausgebildet ist, bedarfsweise ein Ansteuersignal c1 zu erzeugen und an die Antriebseinrichtung 4 zum Antreiben der Tür 3 (zum Öffnen oder Schließen) auszugeben, und bedarfsweise ein Ansteuersignal c2 zu erzeugen und an den Stellantrieb 20 zum Verlagern des Türgriffs 10 zwischen der ersten Stellung ("versenkt") und der zweiten Stellung ("abstehend") auszugeben.

Die Antriebseinrichtung 4 sowie der Stellantrieb 20 weisen jeweils einen Elektromotor auf, der über ein jeweiliges mechanisches Getriebe mit der davon angetriebenen Komponente (Tür 3 bzw. Türgriff 10) verbunden ist.

Gemäß eines durch Software in der Steuereinrichtung 30 implementierten Bedienkonzepts kann beispielsweise vorgesehen sein, das ausgehend von der in Fig. 1 dargestellten Situation bei Annäherung eines Benutzers an das Fahrzeug 1 der Türgriff 10 mittels des Stellantriebs 20 automatisch in die zweite Stellung (aus der Tür 3 heraus) ausgefahren wird, und dass auf eine Betätigung des Türgriffs 10 hin mittels der Antriebseinrichtung 4 die Tür 3 automatisch geöffnet wird.

Fig. 2 zeigt das Fahrzeug 1 in einer Situation nach einem solchen Öffnen der Tür 3.

Aus Sicherheitsgründen ist der Türgriff 10 mit einem Umgebungssensor 40 ausgestattet, mittels welchem während des automatischen Öffnens der Tür 3 eine der Außenseite der Tür 3 benachbarte Umgebung des Fahrzeuges 1 überwacht wird. Bei dem Umgebungssensor 40 kann es sich z. B. um einen Radarsensor, einen Ultraschallsensor, oder einen optischen Sensor handeln. Falls während der Öffnungsbewegung der Tür 3 mittels des Umgebungssensors 40 ein Hindernis detektiert wird, so stoppt die automatische Öffnungsbewegung.

Im dargestellten Beispiel der Fig. 1 und 2 kann der Umgebungssensor 40 beispielsweise (wie auch die Antriebseinrichtung 4 und der Stellantrieb 20) über ein digitales Kommunikationsbussystem (z. B. CAN-Bus oder dergleichen) mit der Steuereinrichtung 30 verbunden sein (in den Figuren nicht dargestellt). Falls der Stellantrieb 20 über ein Kommunikationsbussystem mit der Steuereinrichtung 30 verbunden ist, so kann vorteilhaft vorgesehen sein, dass der Stellantrieb 20 sowie der Umgebungssensor 40 eine gemeinsam genutzte Schnittstelle zur kommunikativen Verbindung dieser beiden Komponenten 20, 40 mit der Steuereinrichtung 30 aufweisen. Diese Schnittstelle kann z. B. in einem elektronischen Steuergerät ausgebildet sein, welches an geeigneter Stelle im Fahrzeug, d. h. zum Beispiel benachbart dem Anbauteil und dem Umgebungssensor, angeordnet ist und über welches sowohl die Verlagerung des Anbauteils als auch die Sensorsignalübertragung eines vom Umgebungssensors erzeugten Sensorsignals bewerkstelligt wird. Das Sensorsignal kann z. B. in der Steuereinrichtung 30 ausgewertet werden.

Bei der nachfolgenden Beschreibung von weiteren Ausführungsbeispielen werden für gleichwirkende Komponenten die gleichen Bezugszeichen verwendet. Dabei wird im Wesentlichen nur auf die Unterschiede zu dem bzw. den bereits beschriebenen Ausführungsbeispielen eingegangen und im Übrigen hiermit ausdrücklich auf die Beschreibung vorangegangener Ausführungsbeispiele verwiesen.

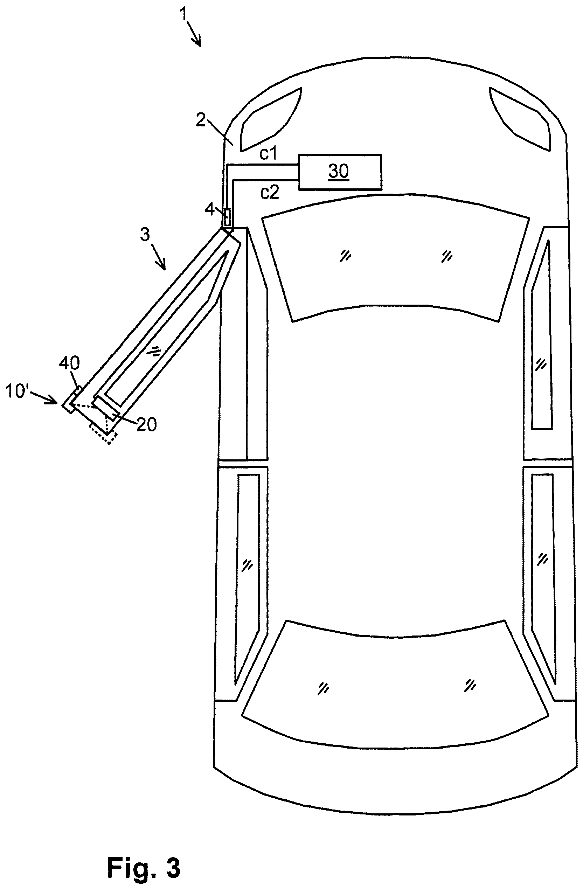

Fig. 3 zeigt ein Fahrzeug 1, das eine Fahrzeugkarosserie 2 umfassend eine Tür 3 und eine ansteuerbare Antriebseinrichtung 4 zum ansteuerbaren Antreiben der Tür 3 aufweist, so dass auf vorbestimmte Bedienhandlungen eines Benutzers ein automatisiertes Öffnen und Schließen der Tür 3 erfolgen kann. Ferner weist das Fahrzeug 1 eine Steuereinrichtung 30 auf, mittels welcher bedarfsweise ein Ansteuersignal c1 zum Ansteuern der Antriebseinrichtung 4 und bedarfsweise ein Ansteuersignal c2 zum Ansteuern eines Stellantriebs 20 zum Verlagern eines an der Tür 3 verlagerbar angeordneten "Anbauteils" erzeugt wird.

Im Unterschied zum Beispiel der Fig. 1 und 2 ist als das mittels des Stellantriebs 20 verlagerbare "Anbauteil" im Beispiel von Fig. 3 ein Türkantenschutz 10' vorgesehen, welcher mittels des Stellantriebs 20 zwischen einer in Fig. 3 mit gestrichelter Linie dargestellten "ersten Stellung" und in Fig. 3 mit durchgezogener Linie dargestellten "zweiten Stellung" verlagert werden kann.

Im dargestellten Beispiel ist vorgesehen, dass beim Öffnen der Tür 3 der Türkantenschutz 10' von der ersten Stellung in die zweite Stellung verlagert wird und beim Schließen der Tür 3 von der zweiten Stellung zurück in die erste Stellung verlagert wird.

An dem Türkantenschutz 10' ist ein Umgebungssensor 40 angeordnet, mittels welchem die Umgebung des Fahrzeuges 1 überwacht wird, beispielsweise sobald nach Beginn einer Öffnung der Tür 3 der Türkantenschutz 10' in die in Fig. 3 dargestellte zweite Stellung gebracht wurde.

Bei den vorstehend erläuterten Ausführungsbeispielen ist das jeweilige Anbauteil (Türgriff 10 bzw. Türkantenschutz 10') an einem bezüglich des Fahrzeuges 1 verlagerbaren Karosserieteil (Tür 3) angeordnet. Abweichend von diesen Beispielen könnte das Anbauteil auch an einem nicht verlagerbaren Teil der Fahrzeugkarosserie angeordnet sein. Ein Beispiel hierfür ist ein mittels eines Stellantriebs verlagerbarer Außenspiegel, der z. B. mittels des Stellantriebs nach Einlegen eines Rückwärtsganges automatisch verlagert wird, oder ein zusätzlicher Außenspiegel, der in einer bestimmten Betriebssituation des Fahrzeuges verlagert und hierbei beispielsweise aus einer versenkten Stellung herausgefahren wird. Ein weiteres Beispiel ist eine Antenneneinrichtung, die durch den Stellantrieb bei Bedarf in eine Stellung verlagert wird, in der diese von der Fahrzeugkarosserie absteht.

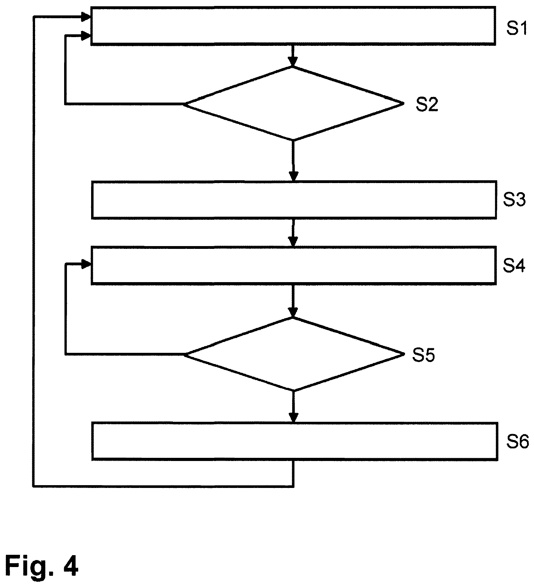

Fig. 4 zeigt ein Ablaufdiagramm eines z. B. mit den Überwachungsvorrichtungen der vorstehend beschriebenen Art durchführbaren Überwachungsverfahrens.

Das Verfahren beginnt mit einem Schritt S1, in dem das Anbauteil sich in der ersten Stellung, d.h. von außerhalb des Fahrzeuges nicht sichtbar und/oder in der Fahrzeugkaroserie versenkt angeordnet befindet.

In einem Schritt S2 wird anhand vorgegebener Kriterien überprüft, ob ein Bedarf für eine Überwachung einer Fahrzeugumgebung mittels des an dem Anbauteil angeordneten Überwachungssensors besteht oder nicht. Falls kein solcher Bedarf besteht, kehrt die Verarbeitung zum Schritt S1 zurück. Im Falle eines solchen Bedarfs wird im Schritt 3 die Verlagerung des Anbauteils in die zweite Stellung angesteuert, in der das Anbauteil von außerhalb des Fahrzeuges sichtbar und/oder von der Fahrzeugkarosserie abstehend angeordnet ist.

In einem Schritt S4 erfolgt eine Aktivierung des Umgebungssensors, wobei diese Aktivierung zu Beginn oder während oder am Ende der durch den Schritt S3 angesteuerten Verlagerungsbewegung erfolgen kann.

In einem Schritt S5 wird anhand vorgegebener Kriterien überprüft, ob weiterhin Bedarf für die Überwachung besteht oder nicht. Falls ein solcher Bedarf besteht, kehrt die Verarbeitung zum Schritt S4 zurück.

Anderenfalls, wenn also kein Überwachungsbedarf mehr besteht, erfolgt in einem Schritt S6 eine Deaktivierung des Umgebungssensors und sogleich (oder alternativ später, aufgrund Erfüllung vorbestimmter weiterer Kriterien) eine Verlagerung des Anbauteils zurück in die erste Stellung, bevor das Verfahren wieder zum Schritt S1 zurückkehrt.

## Patentansprüche

1. Fahrzeug (1) mit einer Vorrichtung zum Überwachen einer Umgebung des Fahrzeugs (1), wobei das Fahrzeug (1) aufweist: eine Fahrzeugkarosserie (2), ein relativ zur Fahrzeugkarosserie (2) verlagerbares Anbauteil (10'), und einen Stellantrieb (20) zum Verlagern des Anbauteils (10') zwischen einer ersten Stellung und einer zweiten Stellung, wobei das Anbauteil (10') in der zweiten Stellung von außerhalb des Fahrzeuges (1) sichtbar ist und/oder von der Fahrzeugkarosserie (2) abstehend angeordnet ist, wobei die Vorrichtung einen an dem Anbauteil (10') angeordneten Umgebungssensor (40) aufweist, der in der ersten Stellung hinter einem Karosserieteil (3) der Fahrzeugkarosserie (2) angeordnet ist und in der zweiten Stellung vor dem Karosserieteil (3) der Fahrzeugkarosserie (2) angeordnet ist.

2. Fahrzeug (1) nach Anspruch 1, wobei das Anbauteil (10') in der ersten Stellung in der Fahrzeugkarosserie (2) versenkt angeordnet ist.

3. Fahrzeug (1) nach einem der vorangehenden Ansprüche, wobei das Anbauteil (10') ein Klappenkantenschutz ist.

4. Fahrzeug (1) nach einem der vorangehenden Ansprüche, wobei das Anbauteil (10') ein Türkantenschutz ist.

5. Fahrzeug (1) nach einem der vorangehenden Ansprüche, wobei der Stellantrieb (20) einen elektromotorischen Antrieb aufweist.

6. Fahrzeug (1) nach einem der vorangehenden Ansprüche, wobei der Stellantrieb (20) einen Energiespeicher aufweist.

7. Fahrzeug (1) nach einem der vorangehenden Ansprüche, wobei der Umgebungssensor (40) ein Radarsensor ist.

8. Fahrzeug (1) nach einem der vorangehenden Ansprüche, wobei der Umgebungssensor (40) ein Ultraschallsensor ist.

9. Fahrzeug (1) nach einem der vorangehenden Ansprüche, wobei der Umgebungssensor (40) ein optischer Sensor ist.

10. Fahrzeug (1) nach einem der vorangehenden Ansprüche, wobei der Umgebungssensor (40) ein magnetischer Sensor oder ein kapazitiver Sensor ist.

11. Verfahren zum Überwachen einer Umgebung eines Fahrzeuges (1), wobei das Fahrzeug (1) aufweist: eine Fahrzeugkarosserie (2), ein relativ zur Fahrzeugkarosserie (2) verlagerbares Anbauteil (10'), und einen Stellantrieb (20) zum Verlagern des Anbauteils (10') zwischen einer ersten Stellung und einer zweiten Stellung, wobei das Anbauteil (10') in der zweiten Stellung von außerhalb des Fahrzeuges (1) sichtbar ist und/oder von der Fahrzeugkarosserie (2) abstehend angeordnet ist, und wobei an dem Anbauteil (10') ein Umgebungssensor (40) angeordnet ist, der in der ersten Stellung hinter einem Karosserieteil (3) der Fahrzeugkarosserie (2) angeordnet ist und in der zweiten Stellung vor dem Karosserieteil (3) der Fahrzeugkarosserie (2) angeordnet ist, wobei das Verfahren aufweist:
Überwachen der Umgebung des Fahrzeuges (1) mittels des an dem Anbauteil (10') angeordneten Umgebungssensors (40), während das Anbauteil (10') sich in der zweiten Stellung befindet und/oder während das Anbauteil (10') zwischen der ersten Stellung und der zweiten Stellung verlagert wird.

12. Verfahren nach Anspruch 11, wobei das Überwachen durchgeführt wird, während das Anbauteil (10') von der ersten Stellung in die zweite Stellung verlagert wird.

## Claims

1. Vehicle (1) having an apparatus for monitoring an environment of the vehicle (1), wherein the vehicle (1) has: a vehicle body (2), an attachment part (10') movable relative to the vehicle body (2), and an actuating drive (20) for moving the attachment part (10') between a first position and a second position, wherein, in the second position, the attachment part (10') is visible from outside the vehicle (1) and/or is arranged so as to project from the vehicle body (2), wherein the apparatus has an environment sensor (40) which is arranged on the attachment part (10') and, in the first position, is arranged behind a body part (3) of the vehicle body (2) and, in the second position, is arranged in front of the body part (3) of the vehicle body (2).

2. Vehicle (1) according to Claim 1, wherein the attachment part (10') is arranged so as to be recessed in the vehicle body (2) in the first position.

3. Vehicle (1) according to one of the preceding claims, wherein the attachment part (10') is flap edge protection.

4. Vehicle (1) according to one of the preceding claims, wherein the attachment part (10') is door edge protection.

5. Vehicle (1) according to one of the preceding claims, wherein the actuating drive (20) has an electromotive drive.

6. Vehicle (1) according to one of the preceding claims, wherein the actuating drive (20) has an energy store.

7. Vehicle (1) according to one of the preceding claims, wherein the environment sensor (40) is a radar sensor.

8. Vehicle (1) according to one of the preceding claims, wherein the environment sensor (40) is an ultrasonic sensor.

9. Vehicle (1) according to one of the preceding claims, wherein the environment sensor (40) is an optical sensor.

10. Vehicle (1) according to one of the preceding claims, wherein the environment sensor (40) is a magnetic sensor or a capacitive sensor.

11. Method for monitoring an environment of a vehicle (1), wherein the vehicle (1) has: a vehicle body (2), an attachment part (10') movable relative to the vehicle body (2), and an actuating drive (20) for moving the attachment part (10') between a first position and a second position, wherein, in the second position, the attachment part (10') is visible from outside the vehicle (1) and/or is arranged so as to project from the vehicle body (2), and wherein an environment sensor (40) is arranged on the attachment part (10'), which environment sensor, in the first position, is arranged behind a body part (3) of the vehicle body (2) and, in the second position, is arranged in front of the body part (3) of the vehicle body (2), wherein the method comprises:
monitoring the environment of the vehicle (1) by means of the environment sensor (40) arranged on the attachment part (10') while the attachment part (10') is in the second position and/or while the attachment part (10') is being moved between the first position and the second position.

12. Method according to Claim 11, wherein the monitoring is performed while the attachment part (10') is being moved from the first position to the second position.

## Revendications

1. Véhicule (1) comprenant un dispositif de surveillance d'un environnement du véhicule (1), le véhicule (1) comportant : une carrosserie de véhicule (2), une pièce rapportée (10') mobile par rapport à la carrosserie de véhicule (2), et un mécanisme d'actionnement (20) pour déplacer la pièce rapportée (10') entre une première position et une seconde position, la pièce rapportée (10') étant visible de l'extérieur du véhicule (1) dans la seconde position et/ou étant disposée de manière à faire saillie par rapport à la carrosserie de véhicule (2), le dispositif comportant un capteur d'environnement (40), disposé sur la pièce rapportée (10'), lequel est disposé, dans la première position, derrière une partie de carrosserie (3) de la carrosserie (2) et est disposé, dans la seconde position, devant la partie de carrosserie (3) de la carrosserie (2).

2. Véhicule (1) selon la revendication 1, dans lequel, la pièce rapportée (10') est disposée de manière escamotée dans la carrosserie de véhicule (2) dans la première position.

3. Véhicule (1) selon l'une quelconque des revendications précédentes, dans lequel la pièce rapportée (10') est un protège-arête de capot.

4. Véhicule (1) selon l'une quelconque des revendications précédentes, dans lequel la pièce rapportée (10') est une protection de bord de porte.

5. Véhicule (1) selon l'une quelconque des revendications précédentes, dans lequel le mécanisme d'actionnement (20) comporte un entraînement par moteur électrique.

6. Véhicule (1) selon l'une quelconque des revendications précédentes, dans lequel le mécanisme d'actionnement (20) comporte un accumulateur d'énergie.

7. Véhicule (1) selon l'une quelconque des revendications précédentes, dans lequel le capteur d'environnement (40) est un capteur radar.

8. Véhicule (1) selon l'une quelconque des revendications précédentes, dans lequel le capteur d'environnement (40) est un capteur à ultrasons.

9. Véhicule (1) selon l'une quelconque des revendications précédentes, dans lequel le capteur d'environnement (40) est un capteur optique.

10. Véhicule (1) selon l'une quelconque des revendications précédentes, dans lequel le capteur d'environnement (40) est un capteur magnétique ou un capteur capacitif.

11. Procédé de surveillance de l'environnement d'un véhicule (1), le véhicule (1) comportant : une carrosserie de véhicule (2), une pièce rapportée (10') mobile par rapport à la carrosserie de véhicule (2), et un mécanisme d'actionnement (20) pour déplacer la pièce rapportée (10') entre une première position et une seconde position, la pièce rapportée (10') étant visible de l'extérieur du véhicule (1) dans la seconde position et/ou étant disposée de manière à faire saillie par rapport à la carrosserie de véhicule (2), et un capteur d'environnement (40) étant disposé sur la pièce rapportée (10'), lequel est disposé, dans la première position, derrière une partie de carrosserie (3) de la carrosserie de véhicule (2) et est disposé, dans la seconde position, devant la partie de carrosserie (3) de la carrosserie (2), le procédé comprenant :
la surveillance de l'environnement du véhicule (1) au moyen du capteur d'environnement (40) disposé sur la pièce rapportée (10'), pendant que la pièce rapportée (10') se trouve dans la seconde position et/ou pendant que la pièce rapportée (10') est déplacée entre la première position et la seconde position.

12. Procédé selon la revendication 11, dans lequel la surveillance est effectuée pendant que la pièce rapportée (10') est déplacée de la première position à la seconde position.
